# EUROPÄISCHE PATENTSCHRIFT

(11) **EP 2 019 742 B1**
(45) Veröffentlichungstag und Bekanntmachung des Hinweises auf die Patenterteilung: **20.04.2011**
(21) Anmeldenummer: 06775162.8
(22) Anmeldetag: 30.08.2006
(51) Int. Cl.: B28B 11/04, B29C 44/18, B29C 44/34

(54) **VERFAHREN UND VORRICHTUNG ZUR HERSTELLUNG EINES GEFORMTEN BAUMATERIALS**
PROCESS AND APPARATUS FOR PRODUCING A SHAPED BUILDING MATERIAL
PROCÉDÉ ET DISPOSITIF DE FABRICATION D'UN MATÉRIAU DE CONSTRUCTION MOULÉ

(30) Priorität: 23.05.2006 CH 8392006
(43) Veröffentlichungstag der Anmeldung: 04.02.2009
(73) Patentinhaber: Veritec AG, 9242 Oberuzwil (CH)
(72) Erfinder: GSPONER, Patrik-Daniel, 9242 Oberuzwil (CH); BREITENMOSER, Armin, 9546 Tuttwil (CH); MAUCHER, Thomas, 88441 Mittelbiberach (DE); ULLERMANN, Klaus, 91126 Schwabach (DE)
(74) Vertreter: Ackermann, Ernst
(86) Internationale Anmeldenummer: PCT/CH2006/000469
(87) Internationale Veröffentlichungsnummer: WO 2007/134467

(56) Entgegenhaltungen:
- EP-A1- 0 045 047
- CH-A- 451 461
- DE-A1- 3 125 700
- US-A- 3 448 719

## Beschreibung

Die Erfindung betrifft ein Verfähren sowie eine Vorrichtung zur Herstellung von geformten Mauerziegeln oder dergleichen, aus Lehm oder anderen Baustoffen, mit Hohlräumen, in der Form von durchgehenden Löchern, wobei ein isolierender Beschichtungsstoff in die Hohlräume der Mauerziegel eingebracht wird.

Die EP-PS 0 045 047 zeigt eine bekannte Lösung für das Einbringen des Beschichtungsstoffes in Mauersteine gemäß dem Oberbegriff des Ansprüche 1. Es ist die Verwendung von Mineralfasern erwähnt. Das Einbringen erfolgt mittels Überdruck oder Unterdruck oder mittels Stopfen. Der Beschichtungsstoff wird gleichzeitig über mehrere offene Kammerenden in die Kammern mehrerer nebeneinander angeordneter Hohlblocksteine eingebracht. Der Beschichtungsstoff wird von oben eingefüllt.

Die CH-PS 451 461/DE 3 125 700 sind ausschliesslich auf das « Aufschäumen» der Hohlräume von Bausteinen ausgerichtet. Es müssen spezielle Vorkehrungen getroffen werden, um das Überquellen des Schaumes zu verhindern. Ferner wird vorgeschlagen, dass man bei Bausteinen mit beidseitigen offenen Hohlräumen während des Füllens auf der Einfüllseite gegenüberliegenden Seite ein Unterdruck anlegt, wobei sowohl bei der CH-PS 451 461 wie auch bei der DE 3 126 700 das Material von oben eingefüllt wird.

Bei allen Lösungen des Standes der Technik können Materialansammlungen an den Aussenkonturen der Mauerziegel nicht vermieden werden.

der Erfindung lag nun die Aufgabe zugrunde, ein Verfahren sowohl eine Vorrichtung zur Herstellung eines geformten Baumaterials durch Einbringen eines Beschichtungsstoffes in ein geformtes Baumaterial zu entwickeln, welche ein einfaches und kostengünstiges Beschichten innere Hohlräume zur Verbesserung von Wärmedämmung ermöglichen, dies unter Vermeidung von überschüssigen Materialansammlungen an den Aussenkonturen.

Das erfindungsgemässe Verfahren ist dadurch gekennzeichnet, dass
a) Mauerziegel (1) automatisch oder von Hand auf einen Trichter (7) gestellt werden, dessen verjüngtes Ende mit einem Rohr (4) verbunden ist, wobei das Rohr (4) in einen Behälter (5) mit Beschichtungsstoff (6) eintaucht und die Auflagefläche und Kontur des Trichters (2) der Aussenkontur der Mauerziegel (1) entspricht und eine wirksame Kantendichtung (3) aufweist, wobei
b) an der Oberseite des Mauerziegels (1) ein gleichartiger, heb- und senkbarer Trichter (7) mit einer Kantendichtung auf den Mauerziegel (1) aufgesetzt wird;
c) wobei der Trichter (7) an der Oberseite des Mauerziegels (1) über ein Rohr und einen verschliessbaren Ventilschieber (8) mit einer Vakuummaschine oder einem Unterdruckerzeugenden Ventilator als Saugvorrichtung verbunden ist;
d) und der Beschichtungsstoff (6) mittels Unterdruck der Saugvorrichtung angesaugt und die Hohlräume der Mauerzlegel (1) füllt und/oder durch das Baumaterial hindurch geleitet wird.

Die erfindungsgemasse Vorrichtung ist dadurch gekennzeichnet, dass
a) Mauerziegel (1) automatisch oder von Hand auf einen Trichter (7) stellbar sind, dessen verjüngtes Ende mit einem Rohr (4) verbunden ist, wobei das Rohr in einen Behälter (5) mit Beschichtungsstoff (6) eingetaucht ist und die Auflagefläche und Kontur des Trichters (2) der Aussenkontur des Mauerziegels (1) entspricht und eine wirksame Kantendichtung (3) aufweist;
b) und an der Oberseite des Mauerziegels (1) ein gleichartiger, heb- und senkbarer Trichter (7) mit einer Kantendichtung auf den Mauerziegel (1) aufsetzbar ist,
c) wobei der Trichter (7) an der Oberseite des Mauerziegeln (1) über ein Rohr und einen verschliessbaren Ventilschieber (8) mit einer Vakuummaschine oder einem Unterdruckerzeugenden Ventilator als Saugvorrichtung verbunden ist;
d) und der Beschichtungsstoff (6) mittels Unterdruck der Saugvorrichtung ansaugbar und die Hohlräume der Mauerziegel (1) füllbar und/oder durch das Baumaterial hindurch leitbar ist

Gemäss der neuen Lösung können geeignete, in einer Flüssigkeitgelöste Beschichtungsstoffe in die Hohlräume Risse, Schlitze oder Poren eines geformten Baumaterials infiltriert werden. Dies unter Meidung überschüssiger Materialansammlungen an den Aussenkonturen.

Bevorzugte Ausführungsformen sind in Unteransprüchen offenbart. So kann der Beschichtungsstoff mittels Unterdruck oder auch im Durchfluss in Form einer Emulsion eingebracht werden. Die Maumaterialien können einzeln oder in Blöcken arrangiert infiltriert werden.

Weiterhin können die Beschichtungsstoffe auch ein Frostschutzmittel (z.B, silikonhaltige Flüssigkeiten oder Silikonstaub) enthalten oder nur ein solches beinhalten. Zusätzlich zu Beschichtung der Hohlräume etc. kann auch eine Aussenbeschichtung erfolgen.

Als geformte Baumaterialien werden insbesondere Mauer und Dachziegel, Fassadenplatten, Verblenderziegel, Klinkerziegel und Spaltplatten gesehen, ohne die Erfindung hierauf zu begrenzen.

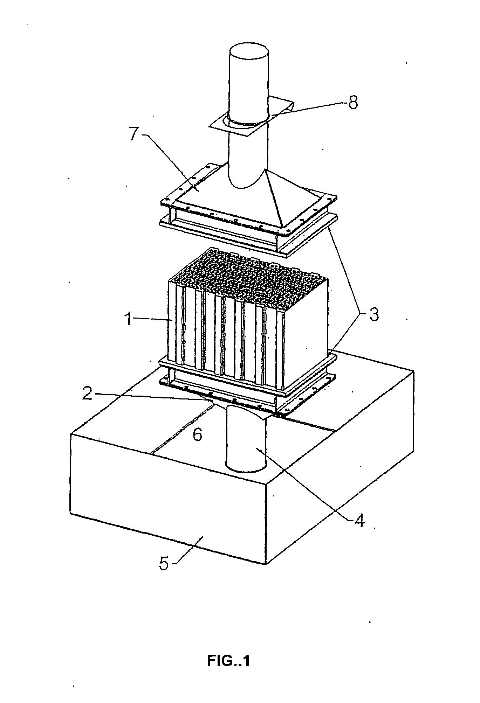

Die Erfindung wird nachfolgend in einem Ausführungsbeispiel anhand einer Zeichnung näher beschrieben. In der Zeichnung zeigen die
- Fig. 1:: die Vorrichtung mit offener Saugvorrichtung

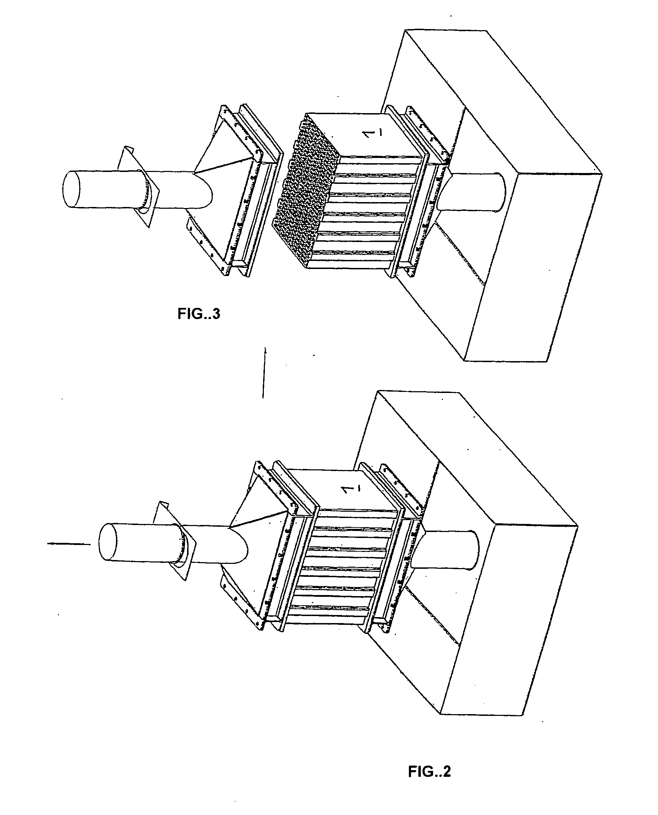

- Fig. 2:: die Vorrichtung mit aufgesetzter Saugvorrichtung.

Ein üblicher Mauerziegel 1 (bzw. Lochziegel) wird automatisch oder von Hand auf einen Trichter 2 gestell; dessen verjüngtes Ende mit einem Rohr 4 verbunden ist. Die Auflagefläche und Kontur des Trichters 2 entspricht der Aussenkontur des Mauerziegels 1 und weist eine wirksame Kantendichtung 3 auf.

An der Oberseite des Mauerziegels 1 wird ein gleichartiger, verfahrbarer (heb- und senkbarer) Trichter 7 mit einer Kantendichtung 3 auf den Mauerziegel 1 aufgesetzt. Der Trichter 7 ist mit einem Rohr zu einem Ventilschieber 8 verbunden, wobei das Rohr zu einer Vakuummaschine oder einem Unterdruck erzeugenden Ventilator weitergeführt ist.

Das Rohr 4 taucht in eine wässrige, isolierende Emulsion 6 ein, die sich in einem Behälter 5 befindet.

Wird nun bei geöffnetem Ventilschieber 8 ein Unterdruck in den Trichtern 2, 7 und Rohren erzeugt, wird die Emulsion 6 sehr schnell angesaugt und füllt die Hohlräume (Poren und Risse) des Mauerziegeln 1 aus. Nach Schliessen es Ventilschiebers 8 wird das Vakuum aufgehoben und überschüssige Emulsion fliesst durch das Rohr 4 in den Behälter 5 zurück.

Anschliesend wird der Trichter 7 wieder nach oben verfahren und der Mauerziegel 1 kann vom Trichter 2 abgehoben und zum Aushärten der Emulsion 6 abgelegt werden.

Die Kantendichtungen 3 dichten den Mauerziegel 1 an der Auflage sowohl gegen die Umgebungsluft als auch gegen das Austreten von Emulsion 6 ab. Sollte dennoch nach dem Ablegen Emulsion aus den Höhlräumen austreten, wird diese entfernt.

Die Kantendichtungen 3 können auch durch speziell ausgebildete Robotergreifer o.dgl. erreicht werden.

An den Oberflächen der Hohlräume des Mauerziegels 1 verbleibt je nach Konsistenz der Emulsion eine mehr oder weniger dicke Dichtschicht zurück, welche aushärtet und den Isolierwert bzgl. Wärmeisolation und Abschirmung gegen Elektrosmog um wenigstens 20-30% erhöht.

Bei Bedarf kann der beschriebene Vorgang auch wiederholt ausgeführt werden.

Anstelle einer Emulsion kann auch ein schaum- oder pulverförmiges Isoliermaterial verwendet werden.

### Bezugszeichen

- 1: Mauerziegel
- 2: Trichter
- 3: Kantendichtung
- 4: Rohr
- 5: Behälter
- 6: Emulsion
- 7: Trichter
- 8: Ventilschieber

## Patentansprüche

1. Verfahren zur Herstellung von geformten Mauerziegeln (1) oder dergleichen, aus Lehm Oder anderen Baustoffen, mit Hohlräumen, in der Form von durchgehenden Löchern, wobei ein isolierender Beschichtungsstoff (6) in die Hohlräume der Mauerziegel (1) eingebracht wird,
**dadurch gekennzeichnet, dass**
a) Mauerziegel (1) automatisch oder von Hand auf einen Trichter (7) gestellt werden, dessen verjüngtes Ende mit einem Rohr (4) verbunden ist, wobei das Rohr (4) in einen Behälter (5) mit Beschichtungsstoff (6) eintaucht und die Auflagefläche und Kontur des Trichters (2) der Aussenkontur der Mauerziegel (1) entspricht und eine wirksame Kantendichtung (3) aufweist, wobei
b) an der Oberseite des Mauerziegels (1) ein gleichartiger, heb- und senkbarer Trichter (7) mit einer Kantendichtung auf den Mauerziegel (1) aufgesetzt wird;
c) wobei der Trichter (7) an der Oberseite des Mauerziegels (1) über ein Rohr und einen verschliessbaren Ventilschieber (8) mit einer Vakuummaschine oder einem Unterdruckerzeugenden Ventilator als Saugvorrichtung verbunden ist:
d) und der Beschichtungsstoff (6) mittels Unterdruck der Saugvorrichtung angesaugt und die Hohlräume der Mauerziegel (1) füllt und/oder durch das Baumaterial hindurch geleitet wird.

2. Verfahren nach Anspruch 1,
**dadurch gekennzeichnet,**
**dass** der Beschichtungsstoff (8) an den Oberflächen der Hohlräume der geformten Mauerziegel (1) aufgebracht wird.

3. Verfahren nach Anspruch 1 oder 2,
**dadurch gekennzeichnet,**
**dass** der Beschichtungsstoff flüssig, insbesondere in der Form einer Emulsion oder pulverförmig ist.

4. Verfahren nach einem der Ansprüche 1 bis 3,
**dadurch gekennzeichnet,**
**dass** der Beschichtungsstoff von einem Behälter (5) schnell angesaugt wird und der überschüssige Beschichtungsstoff zurück in den Behälter (5) fliesst.

5. Verfahren nach einem der Ansprüche 1 bis 4.
**dadurch gekennzeichnet,**
**dass** mit der Emulsion (6) in Abhängigkeit von deren Konsistenz eine mehr oder weniger dicke Schicht für, die Isolation erzeugt wird.

6. Verfahren nach Anspruch 1,
**dadurch gekennzeichnet,**
**dass** der Beschichtungsstoff ein Frostschutzmittel enthält oder zumindest ein solches beinhaltet z.B. silikonhaltige Flüssigkeit oder Silikonstaub.

7. Verfahren nach Anspruch 1,
**dadurch gekennzeichnet,**
**dass** die Mauerziegel (1) In infiltriert werden.

8. Verfahren nach einem der Ansprüche 1 bis 7,
**dadurch gekennzeichnet,**
**dass** ein unterer Trichter (2) mittels eines Leitungselementes mit einem Behälter (5) für einen Beschichtungsstoff und einem oberen Trichter (7) mit einem Ventilschieber (8) verbunden ist, wobei beidseits für die Mauerziegel (1) plane Auflageflächen gebildet und die Kanten abgedichtet werden. ,

9. Verfahren nach Anspruch 8,
**dadurch gekennzeichnet,**
**dass** in den Trichtern (2, 7) und den Rohren ein Unterdruck erzeugt wird, wobei die Emulsion (6) angesaugt wird, die Hohlräume des Mauerziegels (1) gefülft werden und nach Aufgeben des Vakuums überschüssige Emulsion (6) durch das Rohr (4) in den Behälter (5) zurückfliesst.

10. Verfahren nach Anspruch 9,
**dadurch gekennzeichnet,**
**dass** nach dem der überschüssigen Emulsion (6) der Trichter (2) angehoben und das Baumaterial zum Aushärten der Emulsion (6) abgelegt bzw. keramisiert wird.

11. Vorrichtung zur Herstellung von geformten Mauerziegeln (1) oder dergleichen aus Lehm oder andern Baustoffen, mit Hohlräumen, in der Form von durchgehenden Löchern, wobei ein isolierender Beschichtungsstoff in die Hohlräume der Mauerziegel einbringbar ist,
**dadurch gekennzeichnet**, das
a) Mauerziegel (1) automatisch oder von Hand auf einen Trichter (7) stellbar sind, dessen verjüngtes Ende mit einem Rohr (4) verbunden ist, wobei das Rohr in einen Behälter (5) mit Beschichtungsstoff (6) eingetaucht ist und die Auflagefläche und Kontur des Trichters(2) der Aussenkontur des Mauerziegels (1) entspricht und eine wirksame Kantendichtung (3) aufweist;
b) und an der Oberseite des Mauerziegels (1) ein gleichartiger, heb- und senkbarer Trichter (7) mit einer Kantendichtung auf den Mauerziegel (1) aufsetzbar ist,
c) wobei der Trichter (7) an des Oberseite des Mauerziegeln (1) über ein Rohr und einen verschliessbaren Ventilschieber (8) mit einer Vakuummaschine oder einem Unterdruckerzeugenden Ventilator als Saugvorrichtung verbunden ist;
d) und der Beschichtungsstoff (6) mittels Unterdruck der Saugvorrichtung ansaugbar und die Hohlräume der (1) füllbar und/oder durch das Maumaterial hindurch leitbar ist

12. Vorrichtung nach Anspruch 11,
**dadurch gekennzeichnet,**
**dass** die Trichter (2, 7) zu den Mauerziegeln plane Auflageflächen bilden zur Anbringung von Kantenabdichtungen (3).

13. Vorrichtung nach Anspruch 11 oder 12,
**dadurch gekennzeichnet,**
**dass** die Auflagefläche und Kontur wenigstens eines der Trichter der Kantenabdichtung der Aussenkontur des Mauerziegels entspricht.

14. Vorrichtung nach einem der Ansprüche 12 oder 13,
**dadurch gekennzeichnet,**
**dass** Kantenabdichtungen durch einen Robotergreifer oder dergleichen erreicht werden.

## Claims

1. Method for producing shaped bricks (1) or the like from clay or other building materials, said bricks comprising cavities in the form of continuous holes, an insulating coating material (6) being introduced into the cavities of the bricks (1), **characterised in that**
a) bricks (1) are automatically or manually placed on a hopper (7), the tapered end of which is connected to a pipe (4), the pipe (4) dipping into a container (5) of coating material (6) and the support surface and contour of the hopper (2) corresponding to the outer contour of the bricks (1) and having an effective edge seal (3),
b) a similar hopper (7), which can be raised and lowered and has an edge seal, being placed on the brick (1) on the upperface of the brick (1);
c) the hopper (7) on the upper face of the brick (1) being connected via a pipe and a closable valve slide (8) to a vacuum machine or a vacuum-generating fan as a suction device;
d) and the coating material (6) being drawn in by means of a vacuum of the suction device and filling the cavities of the brick (1) and/or being guided through the building material.

2. Method according to claim 1, **characterised in that** the coating material (8) is applied to the surfaces of the cavities of the shaped brick (1).

3. Method according to either claim 1 or claim 2, **characterised in that** the coating material is liquid, in particular in the form of an emulsion, or is powdered.

4. Method according to any one of claims 1 to 3, **characterised in that** the coating material is rapidly drawn in from a container (5) and the excess coating material flows back into the container (5).

5. Method according to any one of claims 1 to 4, **characterised in that**, using the emulsion (6), an insulating layer is produced which has a greater or lesser thickness as a function of the consistency of said emulsion.

6. Method according to claim 1, **characterised in that** the coating material comprises or at least contains an anti-freezing agent, for example a silicone-containing liquid or a silicone powder.

7. Method according to claim 1, **characterised in that** the bricks (1) are infiltrated individually.

8. Method according to any one of claims 1 to 7, **characterised in that** a lower hopper (2) is connected via a line element to a container (5) for a coating material and an upper hopper (7) is connected to a valve slide (8), planar support surfaces being formed on each side for the bricks (1) and the edges being sealed.

9. Method according to claim 8, **characterised in that** a vacuum is generated in the hoppers (2, 7) and the pipes, the emulsion (6) being drawn in, the cavities of the brick (1) being filled and excess emulsion (6) flowing back through the pipe (4) and into the container (5) once the vacuum has been removed.

10. Method according to claim 9, **characterised in that**, once the excess emulsion (6) has flowed back, the hopper (2) is raised and the shaped building material is removed and ceramised to harden the emulsion (6).

11. Device for producing shaped bricks (1) or the like from clay or other building materials, which bricks comprising cavities in the form of continuous holes, it being possible to introduce an insulating coating material into the cavities of the bricks, **characterised in that**
a) bricks (1) can be automatically or manually placed on a hopper (7), the tapered end of which is connected to a pipe (4), the pipe dipping into a container (5) of coating material (6) and the support surface and contour of the hopper (2) corresponding to the outer contour of the bricks (1) and having an effective edge seal (3);
b) and it being possible to place a similar hopper (7), which can be raised and lowered and has an edge seal, on the brick (1) on the upper face of the brick (1),
c) the hopper (7) on the upper face of the brick (1) being connected via a pipe and a closable valve slide (8) to a vacuum machine or a vacuum-generating fan as a suction device;
d) and it being possible for the coating material (6) to be drawn in by means of a vacuum of the suction device and fill the cavities of the brick (1) and/or be guided through the building material.

12. Device according to claim 11, **characterised in that** the hoppers (2, 7) form planar support surfaces for the bricks for applying edge seals (3).

13. Device according to either claim 11 or claim 12, **characterised in that** the support surface and contour of at least one of the hoppers corresponds to the edge seal of the outer contour of the brick.

14. Device according to either claim 12 or claim 13, **characterised in that** edge seals are achieved by means of a robotic gripper or the like.

## Revendications

1. Procédé de fabrication de briques moulées (1) ou similaires, en argile ou autres matériaux de construction, dotées d'espaces creux sous la forme de trous débouchants, un matériau de revêtement (6) isolant étant introduit dans les espaces creux des briques (1),
**caractérisé en ce que**
a) des briques (1) sont posées automatiquement ou à la main sur une trémie (7), dont l'extrémité rétrécie est reliée à un tube (4), le tube (4) s'enfonçant dans un récipient (5) contenant du matériau de revêtement (6) et la surface d'appui et le contour de la trémie (2) correspondant au contour extérieur des briques (1) et présentant une garniture d'arête efficace (3),
b) sur le côté supérieur de la brique (1), une trémie similaire, pouvant être levée et abaissée (7) étant posée avec une garniture d'arête sur la brique (1) ;
c) la trémie (7) étant reliée, sur le côté supérieur de la brique (1), par un tube ou un tiroir de soupape (8) pouvant être fermé à une machine à vide ou à un ventilateur générant une dépression, servant de dispositif d'aspiration,
d) et **en ce que** le matériau de revêtement (6) est aspiré par la dépression du dispositif d'aspiration et remplit les espaces creux des briques (1) et/ou traverse le matériau de construction.

2. Procédé selon la revendication 1,
**caractérisé en ce**
**que** le matériau de revêtement (8) est appliqué sur les surfaces des espaces creux des briques moulées (1).

3. Procédé selon la revendication 1 ou 2,
**caractérisé en ce**
**que** le matériau de revêtement est liquide, se présente en particulier sous la forme d'une émulsion, ou est pulvérulent.

4. Procédé selon l'une quelconque des revendications 1 à 3,
**caractérisé en ce**
**que** le matériau de revêtement d'un récipient (5) est rapidement aspiré et en ce que le matériau de revêtement excédentaire revient dans le récipient (5).

5. Procédé selon l'une quelconque des revendications 1 à 4,
**caractérisé en ce**
**qu'**une couche plus ou moins épaisse pour l'isolation est générée avec l'émulsion (6) en fonction de sa consistance.

6. Procédé selon la revendication 1,
**caractérisé en ce**
**que** le matériau de revêtement contient un produit antigel ou au moins un tel produit, par exemple un liquide contenant de la silicone ou une poussière de silicone.

7. Procédé selon la revendication 1,
**caractérisé en ce**
**que** les briques (1) sont infiltrées individuellement.

8. Procédé selon l'une quelconque des revendications 1 à 7,
**caractérisé en ce**
**qu'**une trémie inférieure (2) est reliée au moyen d'un élément de conduite à un récipient (5) contenant un matériau de revêtement et à une trémie supérieure (7) dotée d'un poussoir de soupape (8), des surfaces d'appui planes pour les briques (1) étant formées de part et d'autre et les arêtes étant rendues étanches.

9. Procédé selon la revendication 8,
**caractérisé en ce**
**qu'**une dépression est générée dans les trémies (2, 7) et les robes, l'émulsion (6) étant aspirée, les espaces creux de la brique (1) étant remplis et l'émulsion excédentaire (6) revenant après la suppression du vide par le tube (4) dans le récipient (5).

10. Procédé selon la revendication 9,
**caractérisé en ce**
**que** la trémie (2) est relevée après le reflux de l'émulsion excédentaire (6) et en ce que le matériau de construction moulé est déposé et céramisé pour durcir l'émulsion (6).

11. Dispositif de fabrication de briques moulées (1) ou similaires en argile ou autres matériaux de construction, dotées d'espaces creux sous la forme de trous débouchants, un matériau de revêtement (6) isolant étant introduit dans les espaces creux des briques (1),
**caractérisé en ce que**
a) des briques (1) sont posées automatiquement ou à la main sur une trémie (7), dont l'extrémité rétrécie est reliée à un tube (4), le tube étant enfoncé dans un récipient (5) contenant du matériau de revêtement (6) et la surface d'appui et le contour de la trémie (2) correspondant au contour extérieur de la brique (1) et présentant une garniture d'arête efficace (3),
b) et **en ce que** sur le côté supérieur de la brique (1), une trémie similaire, pouvant être levée et abaissée (7) est posée avec une garniture d'arête sur la brique (1) ;
c) la trémie (7) étant reliée sur le côté supérieur de la brique (1) par un tube ou un tiroir de soupape (8) pouvant être fermé à une machine à vide ou à un ventilateur générant une dépression, servant de dispositif d'aspiration,
d) et **en ce que** le matériau de revêtement (6) peut être aspiré par la dépression du dispositif d'aspiration et peut remplir les espaces creux des briques [1] et/ou peut traverser le matériau de construction.

12. Dispositif selon la revendication 11,
**caractérisé en ce**
**que** les trémies (2, 7) forment des surfaces d'appui planes par rapport aux briques pour le montagne de garnitures d'arête (3).

13. Dispositif selon la revendication 11 ou 12,
**caractérisé en ce**
**que** la surface d'appui et le contour d'au moins l'une des trémies correspondent à la garniture d'arête du contour extérieur de la brique.

14. Dispositif selon l'une quelconque des revendications 12 ou 13,
**caractérisé en ce**
**que** des garnitures d'arête sont atteintes par une pince de robot ou similaires.
